# EUROPÄISCHE PATENTSCHRIFT

(11) **EP 3 347 427 B1**
(45) Veröffentlichungstag und Bekanntmachung des Hinweises auf die Patenterteilung: **15.04.2020**
(21) Anmeldenummer: 16762803.1
(22) Anmeldetag: 07.09.2016
(51) Int. Cl.: C09J 123/16

(54) **HAFTKLEBESTOFF AUF BASIS EPDM**
PRESSURE-SENSITIVE ADHESIVE BASED ON EPDM
AUTO-ADHÉSIF À BASE D'EPDM

(30) Priorität: 11.09.2015 DE 102015217376
(43) Veröffentlichungstag der Anmeldung: 18.07.2018
(73) Patentinhaber: tesa SE, 22848 Norderstedt (DE)
(72) Erfinder: VON WEDEL-PARLOW, Tobias, 22527 Hamburg (DE); STREBL-PFARR, Maike, 22529 Hamburg (DE)
(86) Internationale Anmeldenummer: PCT/EP2016/071094
(87) Internationale Veröffentlichungsnummer: WO 2017/042221

(56) Entgegenhaltungen:
- JP-A- 2000 169 824
- US-A1- 2007 187 032
- US-A1- 2011 067 799
- US-A1- 2015 037 579

## Beschreibung

Die Erfindung betrifft die Zusammensetzung einer auf EPDM-Kautschuk basierenden Klebemasse sowie deren Verwendung.

Haftklebemassen sind seit langem bekannt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruhen auf ihren adhäsiven Eigenschaften und auf ihren kohäsiven Eigenschaften. Als Basis für Haftklebemassen kommen verschiedene Verbindungen in Frage.

Klebebänder, die mit Haftklebemassen ausgerüstet sind, so genannte Haftklebebänder, werden heute im industriellen und privaten Bereich in vielfältiger Weise verwendet. Üblicherweise bestehen Haftklebebänder aus einer Trägerfolie, die ein- oder beidseitig mit einer Haftklebmasse ausgerüstet ist. Es gibt auch Haftklebebänder, die ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff.
Die Selbst- beziehungsweise Haftklebemassen bestehen üblicherweise aus Acrylat-Copolymeren, Silikonen, Naturkautschuk, Synthesekautschuk, Styrolblockcopolymeren oder Polyurethanen.

Zur Einstellung anwendungsgerechter Eigenschaften können Haftklebemassen durch Zumischen von Klebharzen, Weichmacher, Vernetzern oder Füllstoffen modifiziert werden.

Füllstoffe werden beispielsweise zur Steigerung der Kohäsion einer Haftklebemasse eingesetzt. Dabei führt häufig eine Kombination aus Füllstoff/Füllstoff-Wechselwirkungen und Füllstoff/Polymer-Wechselwirkungen zu der gewünschten Verstärkung der Polymermatrix.

Füllstoffe werden auch zur Gewichts- beziehungsweise Volumenerhöhung in Papier, Kunststoffe, sowie Kleb- und Anstrichstoffe und andere Produkte beigemischt. Die Füllstoffzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe, wie Calciumcarbonat, Kaolin, Talkum, Dolomit und dergleichen werden mechanisch hergestellt.

Auch bei Kautschuk und synthetischen Elastomeren kann man durch geeignete Füllstoffe die Qualität verbessern, so beispielsweise Härte, Festigkeit, Elastizität und Dehnung. Viel gebrauchte Füllstoffe sind Carbonate, insbesondere Calciumcarbonat, aber auch Silicate (Talk, Ton, Glimmer), Kieselerde, Calcium- und Bariumsulfat, Aluminiumhydroxid, Glasfasern und -kugeln sowie Ruße.

Man kann anorganische und organische Füllstoffe auch nach ihrer Dichte unterscheiden. So erhöhen die oft in Kunststoffen und auch Klebemassen verwendeten anorganischen Füllstoffe wie Kreide, Titandioxid, Calcium- und Bariumsulfat die Dichte des Composits, da sie selber eine Dichte aufweisen, die höher ist als die des Polymeren. Bei gleicher Schichtdicke ist das Flächengewicht dann höher.
Daneben gibt es Füllstoffe, die die Gesamtdichte des Composits reduzieren können. Hierzu zählen Mikrohohlkugel, sehr voluminöse Leichtfüllstoffe. Die Kugeln sind mit Luft, Stickstoff oder Kohlendioxid gefüllt, die Kugelschalen bestehen aus Glas, bei einigen Produkten auch aus einem Thermoplasten.

Insbesondere bei Anwendungen im Automobilbereich werden immer häufiger Kunststoffe anstelle von Metallen eingesetzt. Diese besitzen in der Regel eine niedrige Oberflächenenergie, die das Verkleben auf diesen Untergründen erschwert. Zudem sollen Verklebungen möglichst alterungs- und wärmestabil sein. Bisher werden vor allem Produkte auf der Basis von Acrylaten (alterungsstabil, aber nicht gut auf LSE-Oberflächen (LSE: "low surface energy"), SBC-Synthesekautschuken (gut auf LSE, aber nicht wärmefest) oder Naturkautschuk (gut auf LSE, aber nicht alterungsstabil) verwendet. Es fehlt jedoch noch an Lösungen, die alle guten Eigenschaften kombinieren.
Zu den LSE-Oberflächen zählen insbesondere PVA, Polystyrol, PE, PP, EVA oder Teflon.

Im Stand der Technik sind EPDM-Klebmassen bekannt.
Diese sind häufig EPDM/Thermoplast-Blends und somit Schmelzklebstoffe. Weiter bekannt sind EPDM basierte Haftklebmassen, die ein weiteres Polymer zur Einstellung der Haftklebrigkeit benötigen und somit Blends darstellen. In der Regel wird eine ausreichende Scherfestigkeit nur durch eine anschließende Vernetzung (meist Schwefel-Vulkanisation oder Peroxid-Vernetzung) erreicht.

Die US 2011/067799 A1 beschreibt ein Klebeband aus einem Träger und einer darauf zumindest einseitig beschichteten Klebemasse aus einem Olefinpolymer mit einer Dichte zwischen 0,86 und 0,89 g/cm³ und einem Kristallitschmelzpunkt von mindestens 105 °C und aus einem Klebharz.

Die US 2007/187032 A1 beschreibt eine Schmelzklebstoffzusammensetzung, umfassend eine Mischung der folgenden Bestandteile: etwa 5 bis 50 Gew.-% eines glasartigen Poly-α-olefins; etwa 5 bis 70 Gew.-% eines gummiartigen Polymers; etwa 5 bis 65 Gew.-% eines kompatiblen nicht polaren Klebrigmachers; etwa 0 bis 3 Gew.-% eines Stabilisators; etwa 0 bis 10 Gew.-% eines Weichmachers; und etwa 0 bis 50 Gew .-% eines Wachses, wobei sich die Bestandteile der Zusammensetzung zu 100 Gew.-% addieren.

Die US 2015/037579 A1 beschreibt eine Schmelzklebstoffzusammensetzung, umfassend: a) etwa 35 bis etwa 60 Gew.-% mindestens eines homogenen linearen oder im Wesentlichen linearen Interpolymers von Ethylen und α-Olefin; b) etwa 5 bis etwa 25 Gew.-% mindestens eines Blockcopolymers; c) etwa 25 bis etwa 45 Gew.-% mindestens eines Klebharzes; und d) weniger als 10 Gew.-% mindestens eines Wachses; wobei die Summe der Komponenten a), b) und c) mindestens 85 Gew.-% der gesamten Klebstoffzusammensetzung ausmacht und wobei die Zusammensetzung eine Brookfield-Viskosität bei einer Temperatur von 190 °C im Bereich von etwa 7.000 bis etwa 12.000 mPa*s aufweist.

Die JP 2000 169824 A beschreibt klebende Kautschukzusammensetzung für hitzebeständige Bänder, die ein Polymer (vorzugsweise einen Ethylen-Propylen-Copolymer-basierten Kautschuk) mit einer Mooney-Viskosität (MV) von >= 43 bei 100 ° C als Hauptkomponente enthält. Die Zusammensetzung enthält vorzugsweise weiterhin ein Polymer (vorzugsweise ein auf Ethylen-Propylen-Copolymer basierendes flüssiges Polymer) mit einem viskositätsmittleren Molekulargewicht von >= 3.000 g/mol als Klebrigmacher in einer Menge von 20 - 100 Gewichtsteilen pro 100 Gewichtsteilen der Kautschukkomponente. Die Zusammensetzung enthält vorzugsweise weiterhin Zinkmethacrylat als Covernetzungsmittel in einer Menge von 1-3 Gewichtsteilen. pro 100 Gewichtsteilen der Kautschukkomponente. Die Förderbänder, die die Zusammensetzung verwenden, sind zum Tragen von Hochtemperaturmaterialien geeignet.

Aufgabe der Erfindung ist es, eine Möglichkeit aufzuzeigen, mit der Haftklebstoffe auf Basis EPDM für technische Anwendungen zugänglich sind, die das Eigenschaftsprofil von üblichen Haftklebstoffen zeigen, die möglichst kostenreduziert sind, die auch nach längerer Lagerung in verschiedenen Medien keine Klebkraft verlieren und die besonders auf niedrigenergetischen Oberflächen eine gute Verklebungsfestigkeit gewährleisten
Gelöst wird diese Aufgabe durch eine Haftklebemasse, wie sie im Hauptanspruch niedergelegt ist. Gegenstand der Unteransprüche sind vorteilhafte Fortbildungen des Erfindungsgegenstandes. Des Weiteren umfasst die Erfindung die Verwendung dieser Haftklebemasse.

Demgemäß betrifft die Erfindung eine Haftklebemasse, die als Basispolymer mindestens einen oder mehrere feste EPDM-Kautschuke sowie Klebharze enthält, wobei der Anteil der Klebharze bei 30 bis 130 phr liegt, wobei erfindungsgemäß die Klebemasse weichmacherfrei ist.

Die im Folgenden gemachten Angaben in phr bedeuten Gewichtsteile der betreffenden Komponente bezogen auf 100 Gewichtsteile aller EPDM-Polymerkomponenten der Haftklebemasse, also beispielsweise ohne Berücksichtigung der Klebharze. Die EPDM-Polymerkomponenten umfassen dabei alle festen EPDM-Kautschuke als auch gegebenenfalls vorhandene (bei Raumtemperatur) flüssige EPDM-Kautschuke.
Die Angabe Gew.-% ist stets bezogen auf die Zusammensetzung der gesamten Haftklebemasse.

Weiterhin ist ihre Vernetzbarkeit mit energiereichen Strahlen, UV-Licht oder Chemikalien wie Peroxide, Phenolharze oder Schwefelverbindungen von Vorteil.

Der EPDM-Kautschuk kann darüber hinaus mit weiteren funktionellen Gruppen wie beispielsweise Silanen, Acrylaten oder Maleinsäureanhydrid, zum Beispiel durch reaktive Pfropfung, funktionalisiert werden. Diese ermöglichen ebenfalls eine nachträgliche Vernetzung.

Zusätzlich können Vernetzer und Promotoren zur Vernetzung beigemischt werden. Geeignete Vernetzer für die Elektronenstrahlvernetzung und Peroxidvernetzung sind beispielsweise bi-oder multifunktionelle Acrylate, Maleimide, Chinone, Cyanurate, bi-oder multifunktionelle Isocyanate (auch in blockierter Form) oder bi-oder multifunktionelle Epoxide.

EPDM-Kautschuke sind Ethylen-Propylen-Kautschuke mit einem Dien. Erfindungsgemäße EPDM-Kautschuke enthalten neben Ethylen und Propylen als Dien gemäß einer bevorzugten Variante Ethyliden-Norbornen (ENB), Dicyclopentadien oder 5-Vinyl-2-norbornen.

Die Mooney-Viskosität (ML 1+4/125 °C) der EPDM-Kautschuke gemessen gemäß DIN 53523 beträgt vorzugsweise mindestens 20 bis 120, besonders bevorzugt 40 bis 90 und insbesondere 50 bis 80.

Den EPDM-Kautschuken können inerte Trennhilfsmittel wie Talkum, Silicate (Talk, Ton, Glimmer), Zinkstearat und PVC-Puder zugesetzt sein, und zwar insbesondere in einer Größenordnung von 3 phr.
Vorzugsweise sind die Trennhilfsmittel gewählt aus der Gruppe bestehend aus Talkum, Silicate (Talk, Ton, Glimmer), Zinkstearat und PVC-Puder.

Weiterhin vorzugsweise können dem EPDM-Kautschuk zur Verbesserung der Verarbeitbarkeit thermoplastische Elastomere wie beispielsweise Synthesekautschuke mit einem Anteil von bis zu 5 Gew.-% zugesetzt werden.
Stellvertretend genannt seien an dieser Stelle vor allem die besonders verträglichen Styrol-Isopren-Styrol (SIS)- und Styrol-Butadien-Styrol (SBS)-Typen.

Erfindungsgemäße Haftklebemassen können neben einem oder mehreren festen EPDM-Kautschuk(en) bevorzugt mindestens einen flüssigen EPDM-Kautschuk enthalten, wobei der oder die flüssigen EPDM-Kautschuk(e) ebenfalls weichmacherfrei sind.

Der Anteil der flüssigen EPDM-Kautschuke beträgt vorzugsweise bis zu 40 Gew.-%, weiter vorzugsweise zwischen 5 und 35 Gew.-%, weiter vorzugsweise zwischen 10 und 25 Gew.-%. (Die Angabe Gew.-% ist auch hier bezogen auf die Zusammensetzung der gesamten Haftklebemasse, also inklusive der Klebharze.)

Flüssige Kautschuke zeichnen sich gegenüber festen Kautschuken dadurch aus, dass sie einen Erweichungspunkt aufweisen. Dieser beträgt < 80 °C, bevorzugt < 60 °C und besonders bevorzugt < 40 °C.
Die Angaben zum Erweichungspunkt T_{E} von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung); die Messungen erfolgen im Glycerolbad.

Vorzugsweise besteht das Basispolymer aus festen oder festen und flüssigen EPDM-Kautschuken, weiter vorzugsweise ist neben den EPDM-Kautschuken kein weiteres Polymer in der Haftklebemasse vorhanden.
In diesem Fall ist die Haftklebemasse eine Zusammensetzung aus festen und flüssigen EPDM-Kautschuken, einem oder mehreren Klebharz(en), vorzugsweise Alterungsschutzmittel(n) und gegebenenfalls Trennhilfsmitteln, was eine bevorzugte Ausführungsform darstellt. Darüber hinaus können zusätzlich die später erläuterten Füllstoffe und/oder Farbstoffe in geringen Mengen gegebenenfalls enthalten sein.

Alternativ enthält das Basispolymer mehr als 90 Gew.-%, vorzugsweise mehr als 95 Gew.-% festen und flüssigen EPDM-Kautschuk.

Unter der Bezeichnung "Klebharz", englisch "Tackifier Resins", versteht der Fachmann einen Stoff auf Harzbasis, der die Klebrigkeit erhöht.

Als Klebharze können bei der Selbstklebemasse beispielsweise als Hauptkomponente insbesondere hydrierte und nicht hydrierte Kohlenwasserstoffharze und Polyterpenharze eingesetzt werden. Bevorzugt geeignet sind unter anderem hydrierte Polymerisate des Dicyclopentadiens (zum Beispiel Escorez 5300er Serie; Exxon Chemicals), hydrierte Polymerisate von bevorzugt C₈- und C₉-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von C₈- und Cg-Aromaten (zum Beispiel Regalite und Regalrez Serien; Eastman Inc. oder Arkon M; Arakawa), hydrierte Polyterpenharze (zum Beispiel Clearon M; Yasuhara), hydrierte C₅/C₉-Polymerisate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Hydrierte Kohlenwasserstoffharze sind als Abmischkomponente, wie beispielsweise in EP 0 447 855 A1, US 4,133,731 A und US 4,820,746 A beschrieben, besonders geeignet, da durch die Abwesenheit von Doppelbindungen die Vernetzung nicht gestört werden kann und zudem eine hohe Alterungsbeständigkeit erreicht wird.

Darüber hinaus können aber auch nicht hydrierte Harze eingesetzt werden, wenn Vernetzungspromotoren wie zum Beispiel mehrfunktionelle Acrylate eingesetzt werden.

Auch andere nicht hydrierte Kohlenwasserstoffharze, nicht hydrierte Analoga der oben beschriebenen hydrierten Harze, können eingesetzt werden.
Weiterhin können kolophoniumbasierende Harze (zum Beispiel Foral, Foralyn) verwendet werden.

Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Zur Stabilisierung der Haftklebemasse werden üblicherweise primäre Antioxidantien wie zum Beispiel sterisch gehinderte Phenole, sekundäre Antioxidantien wie zum Beispiel Phosphite oder Thioether und/oder C-Radikalfänger zugesetzt.

Gegebenenfalls handelt es sich bei den Klebharzen um Polyterpenharze auf Basis von α-Pinen und/oder β-Pinen und/oder 8-Limonen oder Terpenphenolharze.
Beliebige Kombinationen dieser können eingesetzt werden, um die Eigenschaften der resultierenden Haftklebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Besonders bevorzugt eingesetzte Harze sind (teil-)hydrierte Kohlenwasserstoffharze wie sie beispielsweise von der Firma Eastman unter den Handelsnamen Eastotac und Regalite vertrieben werden.

Die Gewichtsmenge der Harze beträgt 30 bis 130 phr, bevorzugt 50 bis 120 phr, weiter bevorzugt 60 bis 110 phr.

Vorzugsweise besteht die Haftklebemasse aus einer Zusammensetzung nur aus festen oder nur aus festen und flüssigen EPDM-Kautschuken und Klebharz, wobei zusätzlich optional Alterungsschutzmittel zugesetzt sein können.

Die EPDM basierende Haftklebemasse kann zur Einstellung von optischen und klebtechnischen Eigenschaften Additive wie Füllstoffe, Farbstoffe oder Alterungsschutzmittel (Antiozonantien, Antioxidantien (primäre und sekundäre), Lichtschutzmittel usw.) enthalten.
Als Additive zur Klebemasse werden typischerweise genutzt:
- primäre Antioxidantien wie zum Beispiel sterisch gehinderte Phenole
- sekundäre Antioxidantien wie zum Beispiel Phosphite oder Thioether
- Lichtschutzmittel wie zum Beispiel UV-Absorber oder sterisch gehinderte Amine

Die Füllstoffe können verstärkend oder nicht verstärkend sein. Vor allem zu nennen sind hier Siliziumdioxide (sphärisch, nadelförmig oder unregelmäßig wie die pyrogenen Silicas), Schichtsilikate, Kalziumcarbonate, Zinkoxide, Titandioxide, Aluminiumoxide oder Aluminiumoxidhydroxide.

Die Konzentration der die optischen und klebtechnischen Eigenschaften beeinflussenden Additive liegt vorzugsweise bei bis zu 20 Gew.-%, weiter vorzugsweise bei bis zu 15 Gew.-%, weiter vorzugsweise bei bis zu 5 Gew.-%.

Erfindungsgemäß sollten die Anteile sämtlicher zugesetzter Stoffe (neben EPDM-Kautschuk und Klebharz) wie Synthesekautschuke und/oder thermoplastische Elastomere und/oder Füllstoffe und/oder Farbstoffe und/oder Alterungsschutzmittel in der Summe 5 Gew.-%, vorzugsweise 2 Gew.-% nicht übertreffen.

Die aufgezählten Stoffe sind nicht zwingend, die Klebemasse funktioniert auch, ohne dass diese einzeln oder in beliebiger Kombination zugesetzt sind, also ohne Synthesekautschuke und/oder Elastomere und/oder Füllstoffe und/oder Farbstoffe und/oder Alterungsschutzmittel.

Die erfindungsgemäße Haftklebemasse ist gemäß einer bevorzugten Ausführungsform geschäumt. Die Schäumung erfolgt durch das Einbringen und nachfolgende Expandieren von Mikroballons.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Akzo Nobel.
Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte erfindungsgemäße Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE (Dry Expanded) von der Firma Akzo Nobel kommerziell erhältlich.

Erfindungsgemäß bevorzugt weisen mindestens 90 % aller von Mikroballons gebildeten Hohlräume einen maximalen Durchmesser von 10 bis 200 µm, stärker bevorzugt von 15 bis 200 µm, auf. Unter dem "maximalen Durchmesser" wird die maximale Ausdehnung eines Mikroballons in beliebiger Raumrichtung verstanden.

Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Klebemasse liegt gemäß einer bevorzugten Ausführungsform der Erfindung zwischen größer 0 Gew. % und 10 Gew.-%, insbesondere zwischen 0,25 Gew.-% und 5 Gew.-%, ganz insbesondere zwischen 0,5 und 2,5 Gew.-% jeweils bezogen auf die Gesamtzusammensetzung der Klebemasse.
Die Angabe bezieht sich auf unexpandierte Mikroballons.

Eine erfindungsgemäße, expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die erfindungsgemäße Haftklebemasse sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

Die absolute Dichte einer geschäumten erfindungsgemäßen Haftklebemasse beträgt bevorzugt 350 bis 990 kg/m³, stärker bevorzugt 450 bis 970 kg/m³, insbesondere 500 bis 900 kg/m³.
Die relative Dichte beschreibt das Verhältnis der Dichte der geschäumten erfindungsgemäßen Haftklebemasse zur Dichte der rezepturidentischen, ungeschäumten erfindungsgemäßen Haftklebemasse. Die relative Dichte einer erfindungsgemäßen Haftklebemasse beträgt vorzugsweise 0,35 bis 0,99, stärker bevorzugt 0,45 bis 0,97, insbesondere 0,50 bis 0,90.

Als Weichmacher werden die aus der Klebebandtechnologie bekannten weichmachenden, niedrigmolekularen Substanzen verstanden. Weichmacher sind erfindungsgemäß alle Substanzen mit Ausnahme von (flüssigen) EPDM-Kautschuken, die einen Erweichungspunkt von kleiner 60 °C, vorzugsweise kleiner als 40 °C haben.

Insbesondere werden zu den Weichmachern unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate gezählt.
Diese Weichmacher weist die erfindungsgemäße Klebemasse nicht auf.

Unter "weichmacherfrei" wird im erfinderischen Sinne vorzugsweise verstanden, dass die Haftklebemasse gänzlich auf Weichmacher verzichtet. Sind Verunreinigen aus Weichmachern in der Klebemasse zu einem Anteil von maximal 1 Gew.-% enthalten, so fällt dies definitionsgemäß unter den Begriff "weichmacherfrei".
Insbesondere sind in der Haftklebemasse nicht oder zu einem Anteil von maximal 1 Gew.-% enthalten paraffinische und naphthenische Öle, (funktionalisierte) Oligomere wie Oligobutadiene, -isoprene, flüssige Nitrilkautschuke, flüssige Terpenharze, pflanzliche und tierische Öle und Fette, Phthalate und/oder funktionalisierte Acrylate.

Vorzugsweise wird die Haftklebemasse zur Ausrüstung von Trägern zu Klebebändern genutzt.
Als Klebebänder im erfindungsgemäßen Sinne sollen dabei alle ein- oder beidseitig mit Klebmasse beschichteten flächigen oder bandförmigen Trägergebilde verstanden werden, also neben klassischen Bändern auch Etiketten, Abschnitte, Stanzlinge (gestanzte mit Klebemasse beschichtete flächige Trägergebilde), zweidimensional ausgedehnte Gebilde (zum Beispiel Folien) und dergleichen, auch Mehrschichtanordnungen.
Des Weiteren umfasst der Ausdruck "Klebeband" auch so genannte "Transferklebebänder", das heißt Klebebänder ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt.
Vorzugsweise weisen Transferklebebänder eine Dicke von 300 bis 2000 µm auf.

Das Klebeband kann in festen Längen wie zum Beispiel als Meterware oder aber als Endlosware auf Rollen (archimedische Spirale) zur Verfügung gestellt werden.

Der Masseauftrag (Beschichtungsstärke) der Klebemasse liegt vorzugsweise zwischen 10 und 200 g/m², weiter vorzugsweise zwischen 15 und 100 g/m², ganz besonders vorzugsweise zwischen 20 und 70 g/m².

Als Trägermaterialien für das Haftklebeband werden die dem Fachmann geläufigen und üblichen Trägermaterialien wie Papier, Gewebe, Vlies oder Folien aus zum Beispiel Polyester wie Polyethylenterephthalat (PET), Polyethylen, Polypropylen, verstreckten Polypropylen, Polyvinylchlorid, verwendet. Ebenfalls eingesetzt werden können Trägermaterialien aus nachwachsenden Rohstoffen wie Papier, Gewebe aus zum Beispiel Baumwolle, Hanf, Jute, Brennesselfasern oder Folien aus zum Beispiel Polymilchsäure, Cellulose, modifizierter Stärke, Polyhydroxyalkanoat. Diese Aufzählung ist nicht abschließend zu verstehen, sondern im Rahmen der Erfindung ist auch die Verwendung anderer Folien möglich.

Besonders bevorzugt sind Folien aus PET und verstrecktem Polypropylen.
Weiter besonders bevorzugt sind Schaumträger, insbesondere Acrylatschaumträger, die ihrerseits auch (haft-)klebrig sein können.

Das Trägermaterial kann vorzugsweise ein- oder beidseitig mit der Haftlebemasse ausgerüstet sein. Bei der beidseitigen Variante muss nur eine der zwei Klebemassen die erfindungsgemäße sein.

Insbesondere das aus einem beidseitig mit der erfindungsgemäßen Haftklebemasse ausgerüsteten Acrylatschaumträger bestehende Klebeband weist vorzugsweise eine Dicke von 300 bis 2000 µm auf.

Das Haftklebeband wird dadurch gebildet, dass auf den Träger partiell oder vollflächig die Klebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann die Klebemassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Vorteilhaft ist die Verwendung eines Haftvermittlers, einer so genannten Primerschicht, zwischen Träger und Klebmasse oder einer physikalischen Vorbehandlung der Trägeroberfläche zur Verbesserung der Haftung der Klebmasse auf dem Träger.
Als Primer sind die bekannten Dispersion- und Lösungsmittelsysteme verwendbar zum Beispiel auf Basis von Isopren- oder Butadien-haltigen Kautschuk, Acrylatkautschuk, Polyvinyl, Polyvinyliden und/oder Cyclokautschuk. Isocyanate oder Epoxyharze als Additive verbessern die Haftung und erhöhen zum Teil auch die Scherfestigkeit des Haftklebstoffes. Der Haftvermittler kann ebenfalls mittels einer Coextrusions-Schicht auf der einen Seite der Trägerfolie aufgebracht werden. Als physikalische Oberflächenbehandlungen eigenen sich zum Beispiel Beflammung, Corona oder Plasma oder Coextrusionsschichten.

Des Weiteren kann das Trägermaterial rück- oder oberseitig, also der Klebemassenseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein.
Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat oder Polysiloxane. Der Begriff Stearyl steht als Synonym für alle geraden oder verzweigten Alkyle oder Alkenyle mit einer C-Zahl von mindestens 10 wie zum Beispiel Octadecyl.
Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten wie zum Beispiel Escoat 20 von der Firma Mayzo, Polyethyleniminstearylcarbamiden, Chrom-Komplexen von C₁₄- bis C₂₈-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone zum Beispiel auf Basis von Poly(dimethyl-Siloxanen) oder Fluorsilikonverbindungen.

Weiter kann das Trägermaterial vor- beziehungsweise nachbehandelt werden. Gängige Vorbehandlungen sind Hydrophobieren, Coronavorbehandlungen wie N₂-Corona oder Plasmavorbehandlungen, geläufige Nachbehandlungen sind Kalandern, Tempern, Kaschieren, Stanzen und Eindecken.

Das Haftklebeband kann ebenfalls mit einer handelsüblichen Trennfolie oder -papier, die üblicherweise aus einem Basismaterial aus Polyethylen, Polypropylen, Polyester oder Papier das ein- oder doppelseitig mit Polysiloxan beschichtet ist, laminiert sein.

Die Herstellung des erfindungsgemäßen Haftklebefilms kann durch übliche, dem Fachmann bekannte Beschichtungsverfahren erfolgen. Hierbei kann die Haftklebmasse inklusive der Additive, gelöst in einem geeigneten Lösemittel, mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder -ofen entfernt werden. Alternativ kann die Beschichtung der Trägerfolie oder Trennfolie auch in einem lösemittelfreien Verfahren erfolgen. Hierzu wird der EPDM-Kautschuk in einem Extruder erwärmt und aufgeschmolzen. In dem Extruder können weitere Prozessschritte wie das Mischen mit den beschriebenen Additiven, Filtration oder eine Entgasung erfolgen. Die Schmelze wird dann mittels eines Kalanders auf die Trägerfolie oder Trennfolie beschichtet.
Mögliche Verfahren, nach denen EPDM-Kautschuk basierende Klebemassen wie die erfindungsgemäße hergestellt werden, finden sich in der DE 198 06 609 A1 sowie in den Schutzrechten WO 94/11175 A1, WO 95/25774 A1, WO 97/07963 A1.

Das erfindungsgemäße Haftklebeband hat vorzugsweise eine Klebkraft auf einem Stahluntergrund von mindestens 6,0 N/cm bei einem Masseauftrag von 50 g/m².

Weitere Einzelheiten, Ziele, Merkmale und Vorteile der vorliegenden Erfindung werden nachfolgend anhand mehrerer, bevorzugte Ausführungsbeispiele darstellende Figuren näher erläutert. Es zeigen
- Figur 1: ein einseitiges Haftklebeband,
- Figur 2: ein beidseitiges Haftklebeband,
- Figur 3: ein trägerfreies Haftklebeband (Transferklebeband).

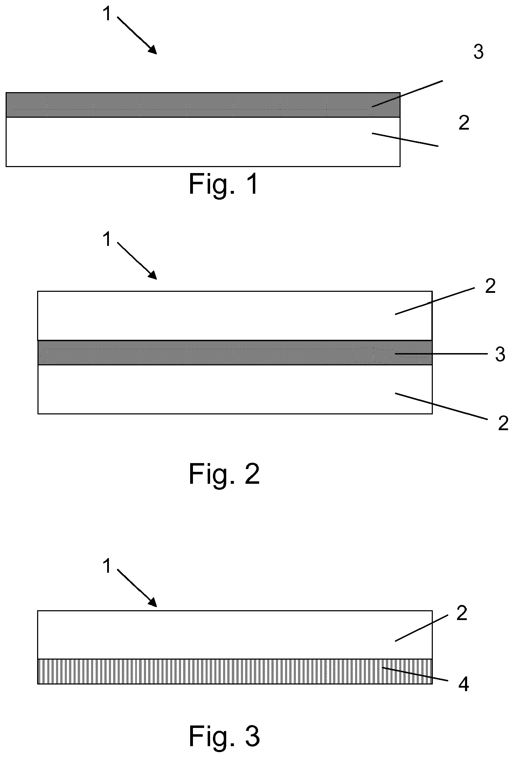

Figur 1 zeigt ein einseitig klebendes Haftklebeband 1. Das Haftklebeband 1 weist eine Klebeschicht 2 auf, die durch Beschichtung einer der zuvor beschriebenen Haftklebemasse auf einen Träger 3 hergestellt wurde. Der Haftklebemassenauftrag beträgt bevorzugt zwischen 10 und 50 g/m².

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

Der in Figur 2 dargestellte Produktaufbau zeigt ein Haftklebeband 1 mit einem Träger 3, der beidseitig mit einer Haftklebemasse beschichtet ist und somit zwei Klebeschichten 2 aufweist. Der Haftklebemassenauftrag je Seite beträgt wiederum bevorzugt zwischen 10 und 200 g/m².

Auch bei dieser Ausgestaltung wird bevorzugt zumindest eine Klebeschicht 2 mit einer Trennfolie abgedeckt. Bei einem aufgerollten Klebeband kann diese eine Trennfolie gegebenenfalls auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der erfinderischen Haftklebemasse ausgestattet sein und auf der anderen Seite eine andere Haftklebemasse eingesetzt werden.

Der in Figur 3 dargestellte Produktaufbau zeigt ein Haftklebeband 1 in Form eines Transferklebebandes, das heißt, ein trägerfreies Haftklebeband 1. Hierzu wird die Haftklebemasse einseitig auf eine Trennfolie 4 beschichtet und bildet so eine Haftklebeschicht 2 aus. Der Haftklebemassenauftrag beträgt hier üblicherweise zwischen 10 und 100 g/m². Gegebenenfalls wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dergleichen eingesetzt werden. In diesem Fall sollte die Oberflächenrauigkeit des Trennpapiers aber reduziert sein, um eine möglichst glatte Haftklebemassenseite zu realisieren.

Zur Verbesserung der kohäsiven Eigenschaften der Haftklebmasse kann diese auch mit den oben beschriebenen Methoden und insbesondere durch die Zugabe von Peroxiden, die Zugabe eines Schwefel-Vulkanisationssystems oder der Bestrahlung mit energiereicher Strahlung vernetzt werden. Dadurch werden besonders Eigenschaften wie die Scherstandzeit oder der Mikroscherweg positiv beeinflusst, wohingegen Eigenschaften wie die Klebkräfte tendenziell sinken.

### Prüfmethoden

Die Messungen werden, wenn nicht anders angegeben, bei einem Prüfklima von 23 ± 1 °C und 50 ± 5 % rel. Luftfeuchte durchgeführt.

### Erweichungspunkt

Die Angaben zum Erweichungspunkt T_{E} von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung); die Messungen erfolgen im Glycerolbad.

### Lagerung

Vor den im Weiteren beschriebenen Tests werden die Muster für mindestens 24 Stunden bei 23 °C und 50% rel. Luftfeuchtigkeit gelagert.

### Klebkraft

Die Prüfung der Schälfestigkeit (Klebkraft) erfolgte in Anlehnung an PSTC-1.
Ein 2 cm breiter Streifen des Haftklebebandes, bestehend aus einer 23 µm dicken, mit Trichloressigsäure geätzten PET-Folie und einer darauf aufgebrachten 50 µm dicken Klebebeschichtung wird auf dem Prüfuntergrund in Form einer ASTM-Stahlplatte durch fünfmaliges doppeltes Überrollen mittels einer 4 kg Rolle verklebt.
Die Oberfläche der Stahlplatte wird zuvor mit Aceton gereinigt. Die Platte wird eingespannt, und der Selbstklebestreifen über sein freies Ende an einer Zugprüfmaschine unter einem Schälwinkel von 180° mit einer Geschwindigkeit von 300 mm/min (beziehungsweise mit den anderen angegebenen Geschwindigkeiten) abgezogen, und die dafür notwendige Kraft ermittelt. Die Messergebnisse sind in N/cm angegeben und über drei Messungen gemittelt und normiert auf die Breite des Streifens in N/cm angegeben.

Die initiale Klebkraft (Klebkraft ASTM-Stahl) wurde direkt im Anschluss an das Verkleben und max. 10 min nach der Verklebung gemessen. Die Klebkraft auf alternativen Substraten (bspw. Polypropylen (PP)) wurde entsprechend der obigen Methodik durch Wechsel des Verklebungssubstrates bestimmt.

### Mikroscherweg-Messung

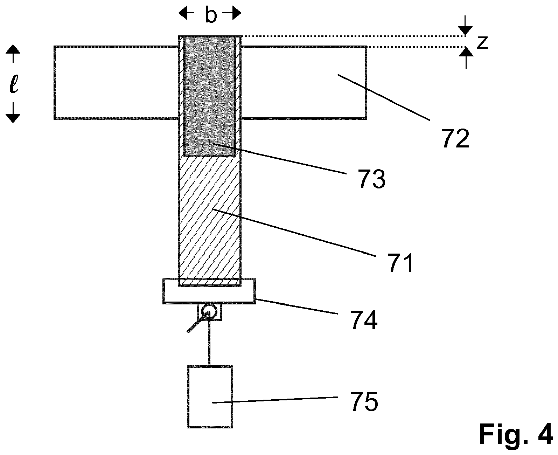

Die Messanordnung ist in Figur 4 illustriert.

Aus dem Klebeband a wurden 10 mm x 50 mm große Flächenstücke geschnitten und das so erhaltene Klebebandmuster (71) derart auf eine polierte, temperierbare, mit Aceton gereinigte 13 mm breite Stahl-Prüfplatte (72) verklebt, dass die Längsrichtung des Klebebandmusters in Querrichtung der Stahlplatte ausgerichtet war, die Verklebungsfläche die Dimensionen l x b = 13 mm x 10 mm betrug und das Klebeband die Stahlplatte auf einer Seite um ein Stück der Länge z = 2 mm überragte. Zur Fixierung wurde das Klebeband anschließend mit einer 2 kg-Stahlrolle und einer Geschwindigkeit von 10 m/min sechsmal überrollt. Auf der der Stahlplatte (72) abgewandten Seite des Klebebandes (71) wurde das Klebeband (71) bündig mit der die Stahlplatte um das Stück der Länge z überragenden Kante mit einem stabilen Klebestreifen (73) (Dimensionen 4 mm x 25 mm; Träger 190 µm dicke PET-Folie) verstärkt, der als Auflage für einen Wegmessfühler (nicht dargestellt) diente. Die so vorbereitete Anordnung wurde derart senkrecht aufgehängt, dass das die Stahlplatte (72) überragende Stück der Länge z des Klebebandmusters (71) nach oben zeigte. Die Stahl-Prüfplatte (72) mit der verklebten Probe (71) wurde auf 40 °C temperiert und das zu vermessende Klebebandmuster (71) am unteren Ende mittels einer Klammer (74) zum Zeitpunkt t0 = 0 mit einem Gewicht (75) von 100 g belastet. Gemessen mittels des Wegmessfühlers wurde die Deformation der Probe unter Scherung über einen Zeitraum von 15 Minuten (beginnend bei t0) bei einer Temperatur von 40 °C und einer relativen Luftfeuchtigkeit von 50 ± 5 %.

Angegeben wird die Scherstrecke nach 15 min (Maximalwert; während der Messung nach unten zurückgelegter Weg der oberen Kante der Probe) als Ergebnis in µm. Der so gemessene Scherweg ist ein quantitatives Maß für den Vernetzungszustand der vermessenen Probe.

Im Folgenden soll die Erfindung anhand mehrerer Beispiele näher erläutert werden, ohne damit die Erfindung unnötig einschränken zu wollen.

### Herstellung der Haftklebmassen

Die in den Beispielen aufgeführten Haftklebemassen wurden als Lösemittel-basierte Massen in einem Kneter mit Doppelsigmaknethaken homogenisiert. Als Lösemittel wurde Benzin (Gemisch von Kohlenwasserstoffen) verwendet. Der Kneter wurde dabei mittels Wasserkühlung gekühlt.

In einem ersten Schritt wurde zunächst der feste EPDM-Kautschuk mit einem Drittel der Gesamtmenge Benzin und dem Alterungsschutzmittel und gegebenenfalls Füllstoffen für 48 Stunden bei 23 °C vorgequollen. Anschließend wurde dieser sogenannte Vorbatch für 15 min geknetet. Anschließend wurde das Harz in drei gleichmäßigen Portionen zugegeben. Dabei wurde nach den ersten beiden Zugaben jeweils 10 min und nach der dritten Zugabe 40 min geknetet. Anschließend wurde der flüssige EPDM Kautschuk oder die Weichmacher zugegeben und für 10 min geknetet. Anschließend wurde das zweite Drittel Benzin zugegeben und 20 min geknetet, bevor das letzte Drittel der gesamten Benzinmenge für 30 min eingeknetet wurde. Der finale Feststoffgehalt liegt bei 35 Gew.-%.

### Herstellung der Prüfmuster

Die Haftklebmasse wurde auf einem handelsüblichen Laborstreichtisch (zum Beispiel von der Firma SMO (Sondermaschinen Oschersleben GmbH)) mit Hilfe eines Streichmessers auf eine 23 µm dicke, mit Trichloressigsäure geätzte PET-Folie beschichtet. Das Benzin wurde bei 105 °C im Umlufttrockenschrank für 10 Minuten abgedampft. Die Spaltbreite beim Beschichten wurde so eingestellt, dass nach dem Abdampfen des Lösemittels ein Masseauftrag von 50 g/m² erreicht wurde. Anschließend wurden die vom Lösemittel befreiten Filme mit silikonisierter PET-Folie abgedeckt und bis zur weiteren Ausprüfung bei 23 °C und 50 % rel. Luftfeuchtigkeit gelagert.

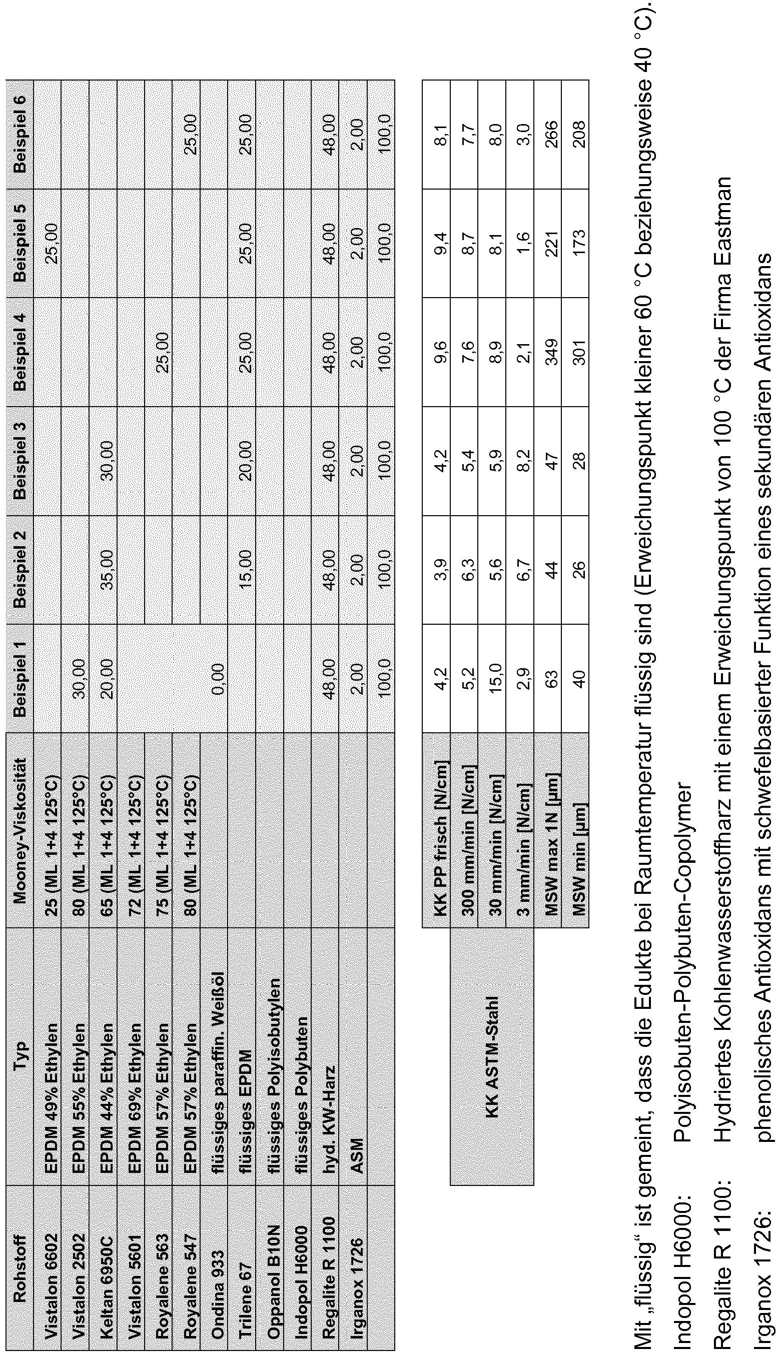

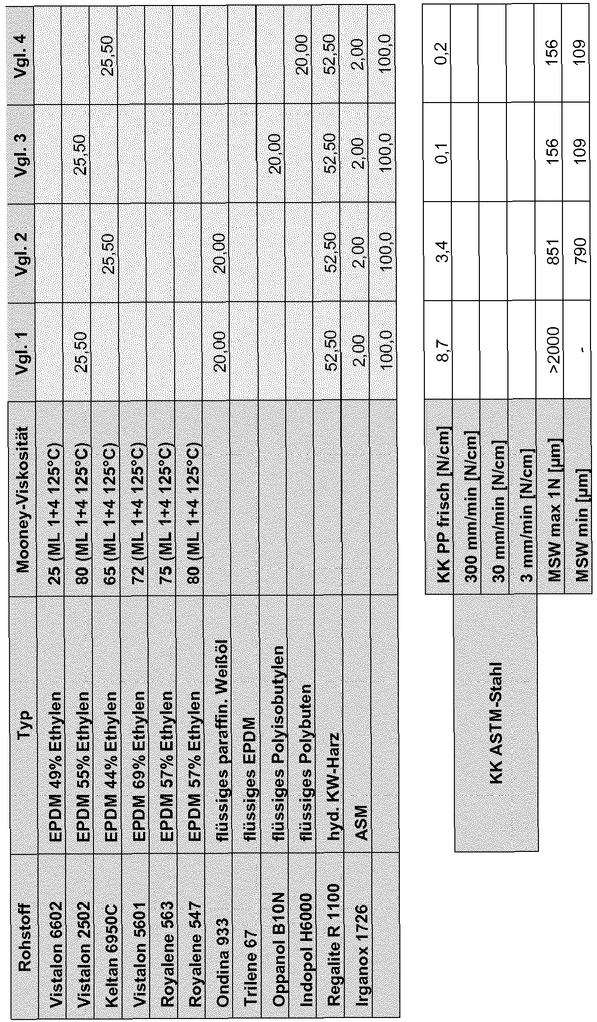

Die Beispiele 1 bis 6 zeigen unabhängig vom verwendeten EPDM-Kautschuk die sehr guten Eigenschaften der erfindungsgemäßen Zusammensetzungen.
Insbesondere vereinen die Haftklebemassen mit Klebkräften von >3.0 N/cm eine gute Verklebungsfestigkeit auf niedrigenergetischen Untergründen (Polypropylen) mit einer ausreichenden Scherfestigkeit (Mikroscherweg < 500 µm).

Die Vergleichsbeispiele 1 und 2 weisen durch Zugabe von paraffinischen Weichmachern zwar eine sehr gute Klebkraft auf. Die Scherfestigkeit ist jedoch für viele Anwendungen nicht ausreichend. Wie im Stand der Technik beschrieben, können auch polymere Weichmacher wie Polyisobutylene oder Polybutylene als Weichmacher eingesetzt werden. Durch den polymeren Charakter schwächen diese Weichmacher die Scherfestigkeit nicht. Die Vergleichsbeispiele 3 und 4 zeigen daher gute Mikroscherwege. Bei diesen Formulierungen ist jedoch die Klebkraft auf niedrigenergetischen Oberflächen zu gering. Insgesamt weisen nur die erfindungsgemäßen Zusammensetzungen sowohl eine gute Klebkraft als auch eine hohe Scherfestigkeit auf.

## Patentansprüche

1. Haftklebemasse, die als Basispolymer mindestens einen oder mehrere feste EPDM-Kautschuke sowie Klebharze enthält, wobei der Anteil der Klebharze bei 30 bis 130 phr liegt (bezogen auf 100 Gewichtsteile aller EPDM-Polymerkomponenten der Haftklebemasse), **dadurch gekennzeichnet, dass**
die Klebemasse weichmacherfrei ist.

2. Haftklebemasse nach Anspruch 1,
**dadurch gekennzeichnet, dass**
das Basispolymer nur aus EPDM-Kautschuken besteht, weiter vorzugsweise dass neben den EPDM-Kautschuken kein weiteres Polymer in der Haftklebemasse vorhanden ist.

3. Haftklebemasse nach Anspruch 1 oder 2,
**dadurch gekennzeichnet, dass**
die EPDM-Kautschuke neben Ethylen und Propylen als Dien Ethyliden-Norbornen (ENB), Dicyclopentadien oder 5-Vinyl-2-norbornen enthalten.

4. Haftklebemasse nach zumindest einem der Ansprüche 1 bis 3,
**dadurch gekennzeichnet, dass**
der Anteil der Klebharze 50 bis 120 phr, weiter bevorzugt 60 bis 110 phr beträgt.

5. Haftklebemasse nach zumindest einem der vorherigen Ansprüche,
**dadurch gekennzeichnet, dass**
die Mooney-Viskosität (ML 1+4/125 °C) der EPDM-Kautschuke gemessen gemäß DIN 53523 mindestens 20 bis 120, bevorzugt 40 bis 90 und insbesondere 50 bis 80 beträgt.

6. Haftklebemasse nach zumindest einem der vorherigen Ansprüche,
**dadurch gekennzeichnet, dass**
in der Haftklebemasse mindestens ein flüssiger EPDM-Kautschuk enthalten ist.

7. Haftklebemasse nach Anspruch 5,
**dadurch gekennzeichnet, dass**
der Anteil der flüssigen EPDM-Kautschuke bis zu 40 Gew.-% beträgt, vorzugsweise zwischen 5 und 35 Gew.-%, weiter vorzugsweise zwischen 10 und 25 Gew.-%.

8. Haftklebemasse nach zumindest einem der vorherigen Ansprüche,
**dadurch gekennzeichnet, dass**
die Haftklebemasse aus einer Zusammensetzung nur aus festen oder nur aus festen und flüssigen EPDM-Kautschuken und Klebharz besteht, wobei zusätzlich optional Alterungsschutzmittel zugesetzt sein können.

9. Haftklebemasse nach zumindest einem der vorherigen Ansprüche,
**dadurch gekennzeichnet, dass**
die Anteile sämtlicher zugesetzter Stoffe (neben EPDM-Kautschuken und Klebharz) wie Synthesekautschuke und/oder thermoplastische Elastomere und/oder Füllstoffe und/oder Farbstoffe und/oder Alterungsschutzmittel in der Summe 5 Gew.-%, vorzugsweise 2 Gew.-% nicht übertreffen.

10. Verwendung einer Haftklebemasse nach zumindest einem der vorherigen Ansprüche in einem ein- oder beidseitig klebenden Klebeband.

11. Verwendung einer Haftklebemasse nach zumindest einem der vorherigen Ansprüche in einem ein- oder beidseitig klebenden Klebeband, wobei der Masseauftrag (Beschichtungsstärke) der Haftklebemasse zwischen 10 und 150 g/m², vorzugsweise zwischen 15 und 100 g/m², besonders vorzugsweise zwischen 20 und 35 g/m² liegt.

## Claims

1. Pressure-sensitive adhesive which comprises as base polymer at least one or more solid EPDM rubbers and also tackifier resins, the fraction of the tackifier resins being 30 to 130 phr (based on 100 parts by weight of all EPDM polymer components of the pressure-sensitive adhesive),
**characterized in that**
the adhesive is plasticizer-free.

2. Pressure-sensitive adhesive according to Claim 1,
**characterized in that**
the base polymer consists only of EPDM rubbers, more preferably **in that** besides the EPDM rubbers there is no further polymer present in the pressure-sensitive adhesive.

3. Pressure-sensitive adhesive according to Claim 1 or 2,
**characterized in that**
the EPDM rubbers besides ethylene and propylene comprise as diene ethylidene-norbornene (ENB), dicyclopentadiene or 5-vinyl-2-norbornene.

4. Pressure-sensitive adhesive according to at least one of Claims 1 to 3,
**characterized in that**
the fraction of the tackifier resins is 50 to 120 phr, more preferably 60 to 110 phr.

5. Pressure-sensitive adhesive according to at least one of the preceding claims,
**characterized in that**
the Mooney viscosity (ML 1+4/125°C) of the EPDM rubbers, measured according to DIN 53523, is at least 20 to 120, preferably 40 to 90, and more particularly 50 to 80.

6. Pressure-sensitive adhesive according to at least one of the preceding claims,
**characterized in that**
in the pressure-sensitive adhesive there is at least one liquid EPDM rubber.

7. Pressure-sensitive adhesive according to Claim 5,
**characterized in that**
the fraction of the liquid EPDM rubbers is up to 40 wt%, preferably between 5 and 35 wt%, more preferably between 10 and 25 wt%.

8. Pressure-sensitive adhesive according to at least one of the preceding claims,
**characterized in that**
the pressure-sensitive adhesive consists of a composition only of solid, or only of solid and liquid, EPDM rubbers and tackifier resin, with the possible, additional, optional addition of aging inhibitors.

9. Pressure-sensitive adhesive according to at least one of the preceding claims,
**characterized in that**
the fractions of all added substances (besides EPDM rubbers and tackifier resin) such as synthetic rubbers and/or thermoplastic elastomers and/or fillers and/or dyes and/or aging inhibitors do not exceed a total of 5 wt%, preferably 2 wt%.

10. Use of a pressure-sensitive adhesive according to at least one of the preceding claims, in a single- or double-sided adhesive tape.

11. Use of a pressure-sensitive adhesive according to at least one of the preceding claims, in a single- or double-sided adhesive tape, the coat weight (coating thickness) of the pressure-sensitive adhesive being between 10 and 150 g/m², preferably between 15 and 100 g/m², very preferably between 20 and 35 g/m².

## Revendications

1. Masse autoadhésive, qui contient au moins un ou plusieurs caoutchoucs EPDM solides ainsi que des résines adhésives en tant que polymère de base, la proportion des résines adhésives étant de 30 à 130 phr (par rapport à 100 parties en poids de tous les composants de polymère EPDM de la masse autoadhésive), **caractérisée en ce que** la masse adhésive est exempte d'assouplissant.

2. Masse autoadhésive selon la revendication 1, **caractérisée en ce que** le polymère de base est seulement constitué de caoutchoucs EPDM, encore de préférence **en ce qu'**outre les caoutchoucs EPDM aucun autre polymère n'est présent dans la masse autoadhésive.

3. Masse autoadhésive selon la revendication 1 ou 2, **caractérisée en ce que** les caoutchoucs EPDM contiennent, outre l'éthylène et le propylène, de l'éthylidène-norbornène (ENB), du dicyclopentadiène ou du 5-vinyl-2-norbornène en tant que diène.

4. Masse autoadhésive selon au moins l'une des revendications 1 à 3, **caractérisée en ce que** la proportion des résines adhésives est de 50 à 120 phr, encore préférablement de 60 à 110 phr.

5. Masse autoadhésive selon au moins l'une des revendications précédentes, **caractérisée en ce que** la viscosité Mooney (ML 1+4/125 °C) des caoutchoucs EPDM mesurée selon la norme DIN 53523 est d'au moins 20 à 120, préférablement 40 à 90 et en particulier 50 à 80.

6. Masse autoadhésive selon au moins l'une des revendications précédentes, **caractérisée en ce qu'**au moins un caoutchouc EPDM liquide est contenu dans la masse autoadhésive.

7. Masse autoadhésive selon la revendication 5, **caractérisée en ce que** la proportion des caoutchoucs EPDM liquides est de jusqu'à 40 % en poids, de préférence est comprise entre 5 et 35 % en poids, encore de préférence entre 10 et 25 % en poids.

8. Masse autoadhésive selon au moins l'une des revendications précédentes, **caractérisée en ce que** la masse autoadhésive est constituée d'une composition composée uniquement de caoutchoucs EPDM solides ou uniquement de caoutchoucs EPDM solides et liquides et de résine adhésive, des agents anti-vieillissement pouvant de plus éventuellement être ajoutés.

9. Masse autoadhésive selon au moins l'une des revendications précédentes, **caractérisée en ce que** les proportions de toutes les matières ajoutées (outre les caoutchoucs EPDM et la résine adhésive) telles que des caoutchoucs synthétiques et/ou des élastomères thermoplastiques et/ou des charges et/ou des colorants et/ou des agents anti-vieillissement ne dépassent pas au total 5 % en poids, de préférence ne dépassent pas au total 2 % en poids.

10. Utilisation d'une masse autoadhésive selon au moins l'une des revendications précédentes dans un ruban adhésif adhésif sur une face ou sur les deux faces.

11. Utilisation d'une masse autoadhésive selon au moins l'une des revendications précédentes dans un ruban adhésif adhésif sur une face ou sur les deux faces, l'application massique (épaisseur de revêtement) de la masse autoadhésive étant comprise entre 10 et 150 g/m², de préférence entre 15 et 100 g/m², particulièrement de préférence entre 20 et 35 g/m².
